## Europäisches Patentamt

(19) **European Patent Office**

**Office européen des brevets**

(11) Numéro de publication: **0 163 572**

**B1**

(12) # FASCICULE DE BREVET EUROPÉEN

(45) Date de publication du fascicule du brevet:
18.05.88

(51) Int. Cl.⁴: **H 02 J 13/00**

(21) Numéro de dépôt: **85400963.6**

(22) Date de dépôt: **15.05.85**

(54) **Dispositif d'interfaces pour le contrôle et la commande de tableaux de distribution.**

(30) Priorité: **17.05.84 FR 8407647**

(43) Date de publication de la demande:
**04.12.85 Bulletin 85/49**

(45) Mention de la délivrance du brevet:
**18.05.88 Bulletin 88/20**

(84) Etats contractants désignés:
**AT BE CH DE GB IT LI LU NL SE**

(56) Documents cité:
**WO-A-81/01350
US-A-3 842 249**

**BROWN BOVERI REVIEW, vol. 66, mars 1979, pages 188-196, Baden, CH; R. FROST et al.: "Becos 30 software system for large dispatching centres"
REVUE GENERALE DE L'ELECTRICITÉ, vol. 85, no. 1, janvier 1976, pages 46-51, Paris, FR; J. DARMON et al.: "Le matériel et le logiciel des bureaux centraux de conduite d'E.D.F."**

(73) Titulaire: **SPIE BATIGNOLLES, Tour Anjou 33 Quai de Dion- Bouton, F-92814 Puteaux (FR)**

(72) Inventeur: **Maury, Georges, 37 Chemin des Hauts Graviers, F-91370 Verrieres Le Buisson (FR)**
Inventeur: **Menou, Georges, 9 Avenue Ronsard, F-93270 Sevran (FR)**

(74) Mandataire: **Bouju, André, Cabinet Bouju 38 avenue de la Grande Armée, F-75017 Paris (FR)**

## Description

La présente invention concerne un dispositif d'interfaces électroniques pour le contrôle et la commande à distance d'un tableau de distribution d'énergie relié avec un système de gestion.

Ce dispositif s'applique en particulier aux tableaux appelés tableaux débrochables basse tension, comportant plusieurs ensembles de distribution d'énergie, qui comprennent chacun plusieurs départs de puissance.

Dans la technique connue, ces tableaux de distribution d'énergie sont reliés au système de gestion, tel qu'un centre de gestion centralisé, un ordinateur, un calculateur, un automate programmable ou autre par une multitude de conducteurs électriques.

Le US-A-3 842 249 (GEYER) décrit un système de gestion centralisée, à partir d'un centre de contrôle de distribution DCC. Les équipements interconnectés entre le dispositif précité et les charges gérées font seulement de l'acquisition et de la restitution d'informations "tout ou rien" ou "analogiques".

En particulier, les dispositifs RPC de GEYER ne sont pas des unités de commande locale mais des organes de coupure qui ne comportent aucun moyen pour adresser des informations "tout ou rien" de signalisation et de commande. En outre, les dispositifs RIO de GEYER ne correspondent pas à des unités de commande à distance mais sont seulement des dispositifs d'entrée sortie qui ne comportent pas de microprocesseur. Par ailleurs, chaque dispositif RIO de GEYER est relié à plusieurs RPC.

Le dispositif selon la présente invention est plus précisément une unité de dialogue (ou d'interface) entre un tableau de distribution d'énergie électrique et un centre de traitement éloigné. Ce dispositif pourrait être par exemple associé complémentairement au système antérieur décrit par le US-A-3 842 249 en tant que "capteur et actionneur intelligent".

Le but de la présente invention est de simplifier la mise en oeuvre des dispositifs connus, en limitant considérablement le nombre des conducteurs électriques assurant la liaison entre les tableaux et le système de gestion, et d'accroître ainsi la fiabilité de ces dispositifs.

Suivant l'invention, le dispositif d'interfaces électroniques pour le contrôle et la commande à distance d'un tableau de distribution d'énergie relié à un système de gestion centralisé, ce tableau comportant plusieurs ensembles de distribution d'énergie comprenant chacun plusieurs départs de puissance, comprend:

- pour chaque départ de puissance, une unité de commande locale reliée à une unité de commande de distance,

- pour chaque ensemble de distribution, une unité centrale, située dans l'ensemble de distribution correspondant.

- Chaque unité de commande locale comporte des moyens pour adresser à l'unité de commande à distance des informations "tout ou rien" de signalisation et de commande,

- chaque unité de commande à distance comprend un microprocesseur permettant de transformer les informations "tout ou rien" provenant de l'unité de commande locale en informations compatibles avec l'unité centrale,

- chaque unité de commande à distance est reliée à l'unité centrale par une liaison normalisée du type bus série à quatre conducteurs,

- chaque unité centrale présente au moins un circuit de contrôle de base comprenant un microprocesseur permettant l'échange d'informations entre chaque unité de commande à distance et le système de gestion et,

- chaque unité centrale est reliée au système de gestion centralisée par une liaison série ou boucle de courant à quatre conducteurs.

Selon ce dispositif, la commande locale adresse à l'unité de commande à distance des informations "tout ou rien" de signal isation et/ou de commande, cette unité de commande à distance transforme ces informations en informations compatibles avec l'unité centrale qui est en liaison avec le système extérieur de gestion au moyen d'une liaison série ou boucle de courant normalisée à quatre conducteurs.

Cette dernière liaison remplace ainsi la multitude de conducteurs utilisés dans les dispositifs connus et permet de ce fait une simplification considérable du cablage électrique et d'obtenir une augmentation de la sécurité et de la fiabilité du fonctionnement du dispositif.

Selon une version avantageuse de l'invention, le circuit de contrôle de base est relié en outre au moyen d'une liaison normalisée à quatre conducteurs, à un équipement de maintenance et de télédiagnostic permettant d'adresser directement des informations à cette unité de contrôle.

De préférence, l'unité centrale comporte un second circuit de contrôle relié au moyen d'une liaison série normalisée à quatre conducteurs avec une seconde unité de gestion, un troisième circuit de contrôle connecté au moyen d'une liaison normalisée à quatre conducteurs avec une imprimante et un clavier avec écran de visualisation, permettant de consigner les états du dispositif et l'introduction de données, un circuit à entrées analogiques relié au microprocesseur du circuit de base par un bus parallèle pour mesurer des grandeurs telles que puissance, intensité et fréquence de courant, et un circuit à sorties analogiques pour envoyer des informations analogiques au moyen d'une liaison normalisée, vers des équipements à distance, tels que des appareils pour mesurer les grandeurs précitées, et des circuits pour gérer entre elles les informations "tout ou rien" traitées par l'unité de commande centrale, chacun de ces circuits comprenant plusieurs entrées et sorties "tout ou rien" reliées à des capteurs ou actionneurs extérieurs.

Selon une version préférée de l'invention, chaque unité de commande à distance comprend des moyens pour transformer les informations "tout ou rien" reçues de l'unité de commande locale en messages de huit caractères et l'unité de commande locale comprend un circuit local de signalisation de base, un circuit local de signalisation d'extension, un circuit local de signalisation et de commande de base, un circuit local de signalisation et de commande d'extension et différents circuits locaux de signalisation de commande permettant, en liaison avec les circuits précédents, la commande locale des équipements de puissance du tableau.

D'autres particularités et avantages de l'invention apparaîtront encore dans la description ci-après:

Aux dessins annexés donnés à titres d'exemples non limitatifs:

- la figure 1 est le schéma d'ensemble d'un dispositif selon l'invention,
- la figure 2 est une vue en perspective du tiroir comportant l'unité de commande locale,
- la figure 3 est un schéma montrant différents circuits de l'unité de commande locale,
- la figure 4 est un schéma montrant les différents circuits de l'unité de commande à distance,
- la figure 5 est un schéma montrant les différents circuits de l'unité centrale,
- la figure 6 montre la carte-mère qui supporte les différentes cartes sur lesquelles sont imprimés les différents circuits de l'unité centrale,
- la figure 7 est le schéma du circuit de contrôle de base de l'unité centrale, ainsi que les circuits pour une unité de gestion complémentaire et de consignation d'état,
- la figure 8 est le schéma du circuit à entrées analogiques de l'unité centrale,
- la figure 9 est le schéma du circuit à sorties analogiques de l'unité centrale,
- la figure 10 est le schéma d'un circuit pour gérer entre elles les informations traitées par l'unité de commande locale.

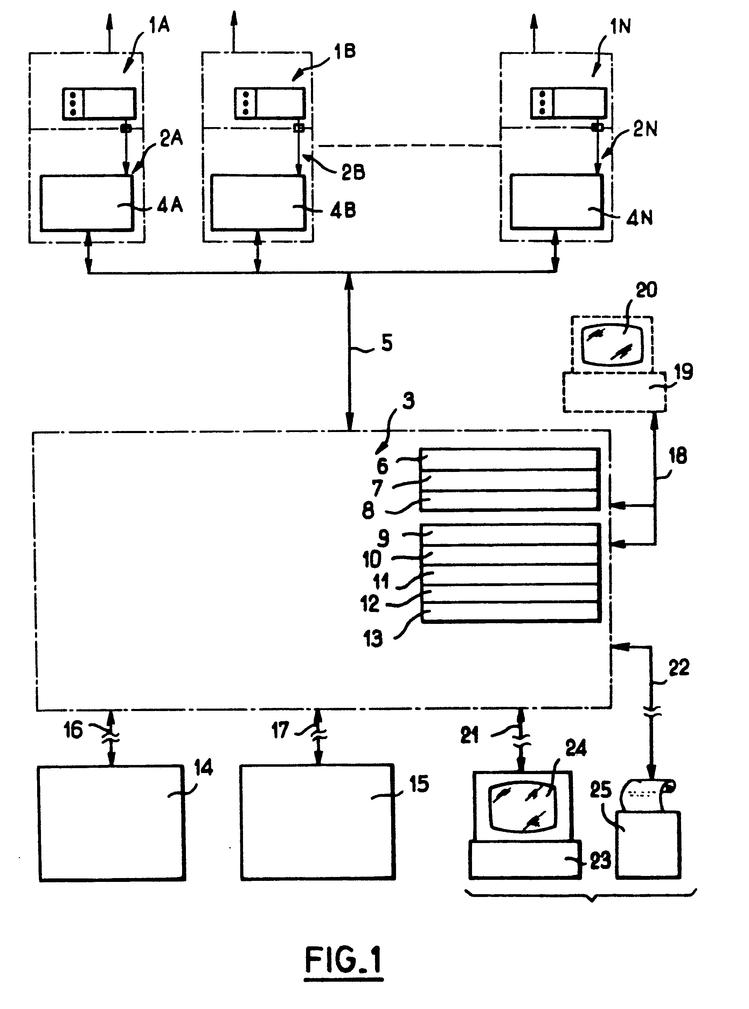

Sur le schéma d'ensemble de la figure 1, on voit que le dispositif d'interfaces électroniques pour le contrôle et la commande à distance d'un tableau de distribution d'énergie comprend essentiellement:

- plusieurs unités de commande locales 1A, 1B,... 1N correspondant à chaque départ de puissance du tableau, chacune de ces unités de commande locales étant reliées à une unité de commande à distance 2A, 2B, ... 2N et,
- une unité centrale 3 pour chaque ensemble de distribution d'énergie du tableau.

Chaque unité de commande locale 1A, 1B, ...1N comporte des moyens qui seront détaillés plus loin pour adresser à l'unité de commande à distance 2A, 2B, ... 2N des informations "tout ou rien" de signalisation et de commande.

Chaque unité de commande à distance 2A, 2B,... 2N comprend un circuit 4A, 4B, ... 4N qui sera détaillé plus loin et qui comporte un microprocesseur permettant de transformer les informations "tout ou rien" provenant de l'unité de commande locale 1A, 1B, 1N en informations compatibles avec l'unité centrale 3.

Chaque unité de commande à distance 2A, 2B,... 2N est reliée à l'unité centrale 3 par une liaison normalisée 5 du type bus série RS 422 comportant quatre conducteurs (deux conducteurs d'émission et deux conducteurs de réception).

L'unité centrale 3 présente différents circuits 6, 7, 8, 9, 10, 11, 12, 13 qui seront détaillés plus loin, permettant entre autres l'échange d'informations entre chaque unité de commande à distance 2A, 2B, ... 2N et un ou plusieurs centres de gestion 14, 15, au moyen d'une liaison série 16, 17 du type RS 232 ou boucle de courant normalisée 20 mA à quatre conducteurs (deux d'émission et deux de réception).

L'unité centrale 3 est reliée en outre au moyen d'une liaison normalisée 18 à quatre conducteurs à un équipement de maintenance et de télédiagnostic comprenant un clavier 19 et un écran de visualisation 20 permettant à un opérateur d'adresser directement des informations à l'unité centrale 3.

L'unité centrale 3 est également reliée au moyen d'une liaison série normalisée 21, 22 du type RS 232 à un clavier 23 avec écran de visualisation 24 et avec une imprimante 25 permettant de consigner les états du dispositif et l'introduction de données.

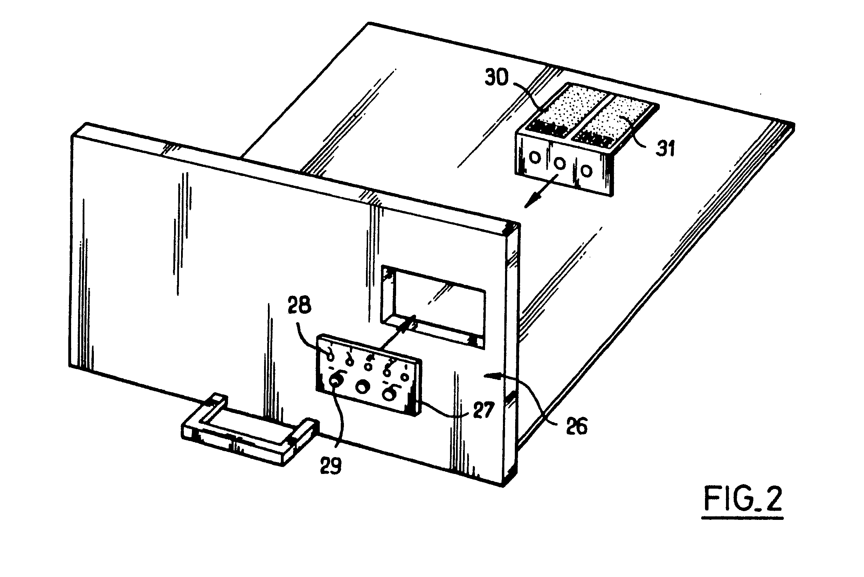

On va maintenant détailler l'unité de commande locale, telle que 1A. Chaque unité de commande locale est disposée dans un tiroir 26 (voir figure 2) monté de façon mobile, c'est-à-dire débrochable et embrochable, dans le tableau de distribution d'énergie.

Ce tiroir 26 comporte des organes non représentés tels que des disjoncteurs, des fusibles, des contacteurs, des relais de protection ou de mesure, des inverseurs de source et autres coopérant avec le circuit électrique de puissance du tableau.

Le tiroir 26 comprend sur sa face avant un afficheur 27 comportant des diodes électro-luminescentes telles que 28 permettant de signaler des états tels que tiroir débroché, tiroir embroché, tiroir en essai, défaut homopolaire, tiroir indisponible, etc.

- L'afficheur 27 présente également des boutons-poussoirs tels que 29 pour permettre la télécommande.

Cet afficheur 27 est connecté à deux circuits locaux 30, 31.

L'unité de commande locale présente les différents circuits électroniques suivants:
- un circuit local de signalisation de base,
- un circuit local de signalisation d'extension,
- un circuit local de signalisation et de commande de base,
- un circuit local de signalisation et de commande d'extension, et
- plusieurs circuits locaux de commande numérotés de 1 à 5.

Ces circuits permettent par association et juxtaposition d'analyser les organes de

distribution de puissance du tableau tels que disjoncteurs, fusibles, contacteurs, relais de protection et de mesure, inverseur de source, etc.

Le circuit local de signalisation de base 30 comporte trois signalisations par diodes électro-luminescentes respectivement verte, rouge et jaune signalant les états suivants : enclenchement, déclenchement et défaut. Ces trois informations sont envoyées à la sortie du circuit reliée à l'unité de commande à distance 2A.

Le circuit local de signalisation d'extension 31 comporte trois signalisations complémentaires par diodes électro-luminescentes, pour signaler des états complémentaires tels que tiroir embroché, tiroir débroché, tiroir en essai, défaut homopolaire, tiroir indisponible, etc. Ces signalisations complémentaires peuvent être combinées avec les états du circuit 30 de base.

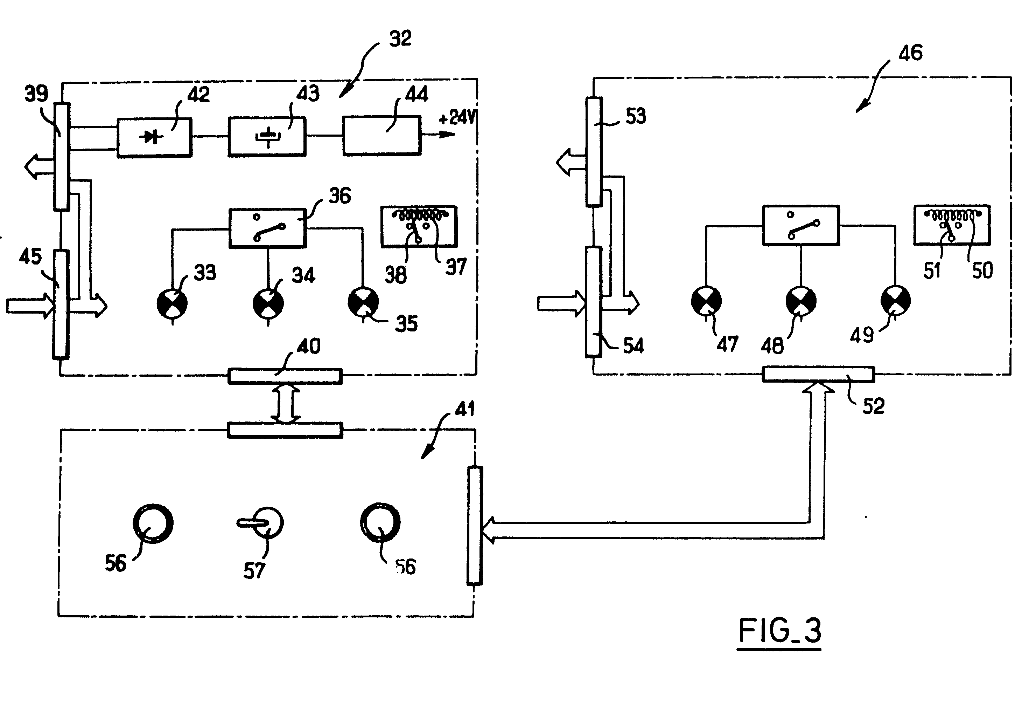

Sur la figure 3, on a représenté schématiquement le circuit local de signalisation et de commande de base 32. Ce circuit comprend trois signalisations par diodes électro-luminescentes 33, 34, 35, un interrupteur 36 pour tester ces diodes, un relais 37 de commande débrochable avec un inverseur 38, un connecteur 39 de liaison avec l'unité de commande à distance 2A et un connecteur 40 de liaison avec l'un 41 des circuits de commande numérotés - de 1 à 5.

La sortie 39 du circuit 32 est reliée par l'intermédiaire d'un redresseur 42, d'un filtre 43 et d'un régulateur 44 à une alimentation en tension alternative de 24 volts.

L'entrée 45 du circuit 32 est reliée à une logique câblée.

Le circuit 32 adresse à l'unité de commande à distance trois informations "tout ou rien" de signalisation et reçoit une information "tout ou rien" de commande.

Le circuit de signalisation et de commande d'extension 46 comprend trois diodes de signalisation complémentaires 47, 48, 49, un relais complémentaire de commande débrochable 50 avec inverseur 51 et un connecteur 52 de liaison avec l'un des circuits de commande tels que 41.

La sortie 53 du circuit est reliée à l'unité de commande à distance 2A et l'entrée 54 est reliée à la logique câblée.

Les circuits de commande numérotés de 1 à 5, tels que le circuit 41 permettent au moyen d'un bouton poussoir ou de connecteurs la commande locale des équipements de puissance du tableau.

Le circuit 41 par exemple est destiné à commander le fonctionnement d'un contacteur et comporte à cet effet un bouton poussoir "marche" 55, un bouton poussoir "arrêt" 56 et un commutateur "local-distance" 57.

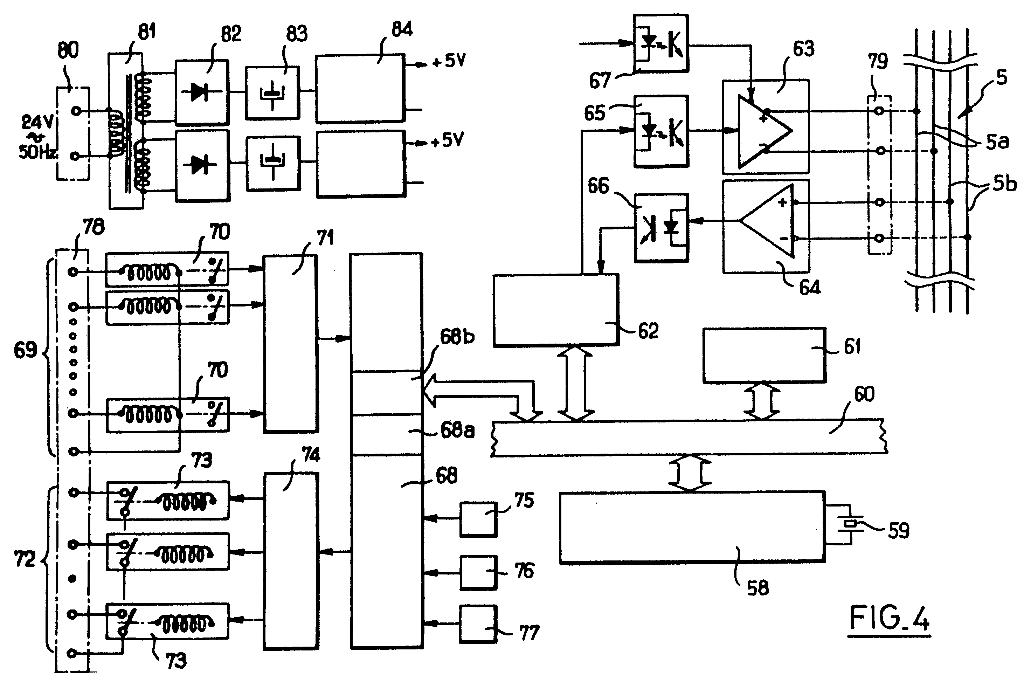

On va maintenant détailler, en référence à la figure 4, l'unité de commande à distance 2A.

Le circuit de commande à distance 4A constitue l'interface entre l'unité de commande locale 1A que l'on vient de décrire et l'unité centrale 3. Ce circuit de commande à distance 4A permet de transformer les informations "tout ou rien" provenant des circuits de signalisation et de commande locale en informations compatibles avec l'unité centrale 3 sous forme d'échanges de messages de huit caractères sur une liaison 5 type bus RS 422 de quatre conducteurs comprenant deux conducteurs d'émission 5a et deux conducteurs de réception 5b.

Ce circuit de commande à distance comporte essentiellement un microprocesseur 58 du type 8085 relié à un quartz 59 oscillant à 6,144 MHz et dont le bus 60 est relié à une mémoire REPROM 61 type 2764 de 8 K octets.

Le bus 60 du microprocesseur est également relié à un composant 62 du type USART 8251A connecté à un émetteur différentiel 63 type MC3487P et à un récepteur différentiel 64 du type MC3486P par l'intermédiaire de photocoupleurs 65, 66. L'une des entrées de l'émetteur différentiel 63 est également reliée à un photocoupleur 67 indépendant du microprocesseur 58. L'émetteur différentiel 63 est relié aux conducteurs d'émission 5a du bus RS 422, tandis que le récepteur différentiel 64 est relié au conducteur de réception 5b de ce bus.

Le bus 60 du microprocesseur 58 est également relié à un interface 68 type PPI 8155 contenant une mémoire RAM 68a et une horloge (timer) 68b. Cet interface 68 est relié aux entrées "tout ou rien" 69 au moyen d'une série de relais 70 du type REED 24 volts continus par l'intermédiaire d'une résistance de rappel au plus 5 volts 71. L'interface 68 est relié au sorties "tout ou rien" 72 au moyen d'une série de relais 73 du type REED 5 volts continus par l'intermédiaire d'un amplificateur de commande 74 du type 7417.

L'interface 68 est également connecté à deux roues codeuses décimales 75, 76 et à une roue codeuse hexadécimale 77.

Les entrées "tout ou rien" 69 et les sorties "tout ou rien" 72 sont regroupées sur un connecteur 78 raccordé à l'unité de commande locale 1A.

Un second connecteur 79 permet de raccorder le circuit de commande à distance au bus 5 du type RS 422.

Un troisième connecteur 80 permet de raccorder le circuit de commande à distance à une alimentation de 24 volts alternatifs reliée à un transformateur 81, des redresseurs 82, des filtres 83 et des régulateurs 84 qui permettent d'alimenter en 5 volts continus, le microprocesseur 58 et le bus 5 RS 422.

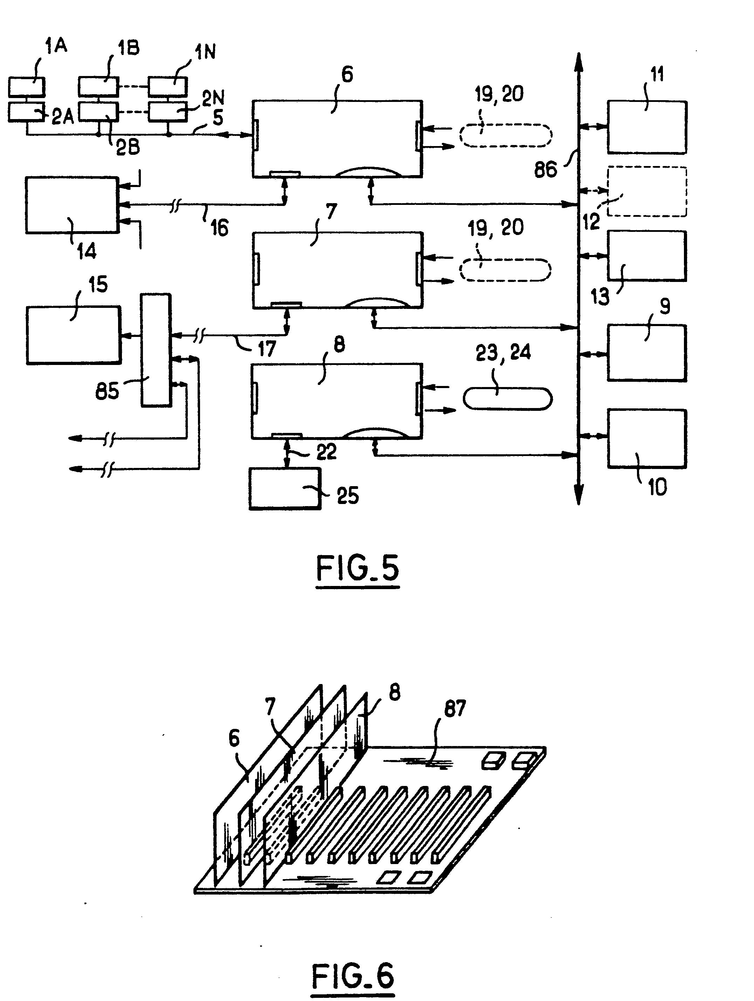

L'unité centrale dont le schéma est représenté sur la figure 5 est incorporé dans un tiroir débrochable intégré dans une colonne de départ du tableau de distribution.

Les unités de commande locales 1A, 1B, ... 1N et les unités de commande à distance 2A, 2B, ... 2N sont reliées à un circuit de contrôle de base 6 qui permet le dialogue par le bus 5 type RS 422 avec les différentes unités de commande à distance 2A, 2B, ... 2N. Ce circuit de contrôle de base 6 est relié par une liaison 16 type RS 232/V24 ou boucle de courant 0/20 mA avec une unité extérieure de gestion centralisée 14. Ce circuit de contrôle de base 6 est également en liaison avec un équipement de maintenance et de télédiagnostic 19, 20 au moyen d'une liaison du type précité.

L'unité centrale comporte un second circuit de contrôle 7 identique au circuit de base 6, qui est en liaison au moyen d'un bus 17 type RS 232 ou boucle 0/20 mA avec une autre unité extérieure de gestion 15 telle qu'une unité de "process" particulière. Cette liaison est réalisée au moyen d'un diffuseur 85 relié à d'autres systèmes non représentés.

Un troisième circuit de contrôle 8, de conception identique aux circuits 6 et 7 permet de consigner les états en liaison avec une imprimante 25. L'une des liaisons de ce circuit est reliée à un clavier 23 comportant un écran de visualisation 24 pour permettre la mise à l'heure et l'édition de certaines fonctions ou événements.

Les trois circuits de contrôle 6, 7, 8 sont reliés par l'intermédiaire d'un bus parallèle 86 à des circuits 9, 10, 11, 12, 13.

Le circuit 9 qui comprend huit entrées analogiques permet de traiter des informations analogiques 0,4/20 mA pour mesurer des puissances, des intensités, des fréquences, des cosinus, etc.

Le circuit 10 comprend huit sorties analogiques et permet d'envoyer vers des équipements à distance compatibles en 0,4/20 mA tels que voltmètres, ampèremètres, fréquence-mètres, des informations analogiques.

Les trois circuits 11, 12, 13 identiques entre eux permettent de gérer des informations "tout ou rien". Chacun de ces circuits 11, 12, 13 comprend huit entrées "tout ou rien", huit sorties "tout ou rien" et huit entrées/ sorties "tout ou rien".

Les circuits 6, 7, 8, 9 ... 13 se présentent sous la forme de cartes qui sont embrochées sur une carte-mère 87 (voir figure 6) portant le bus parallèle 86.

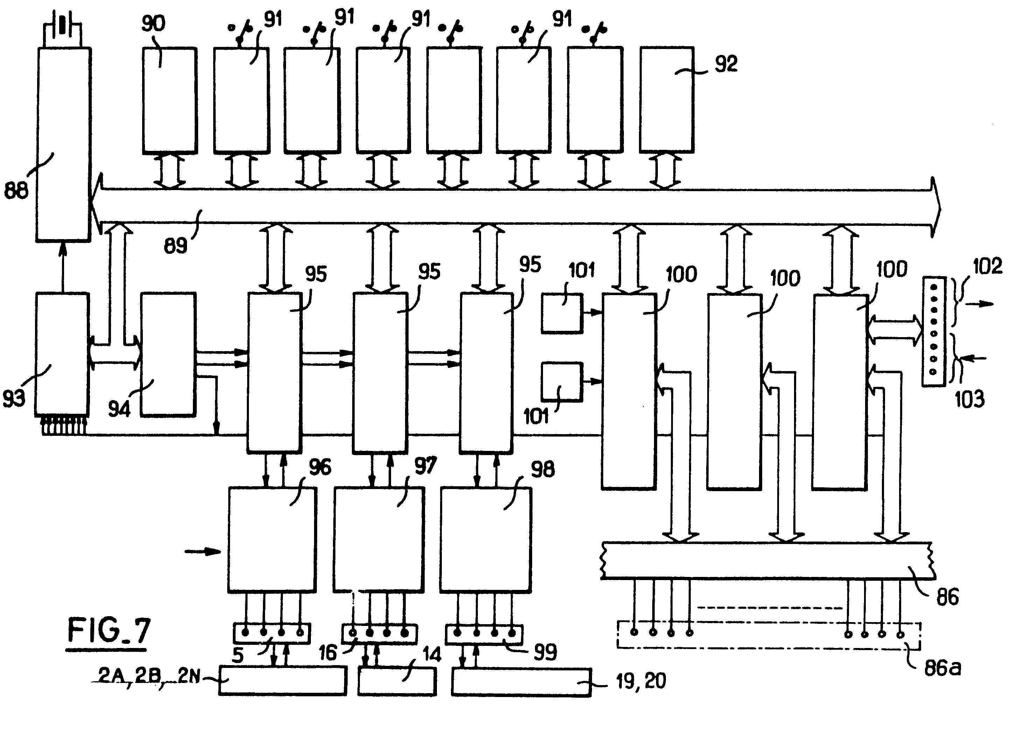

La figure 7 représente le schéma du circuit de contrôle de base 6. Ce circuit comprend un microprocesseur 88 du type 8085 dont le bus 89 est relié à une mémoire REPROM 90 de huit K octets type 2764, à une série de mémoires 91 RAM/REPROM type 2764/6264 pouvant être commutés soit en RAM soit en REPROM et à une mémoire 92 RAM type 6264 de huit K octets.

Le microprocesseur 88 est relié en outre à un contrôleur d'IT 93 type 8259 A qui est lui-même relié au bus 89 et à une horloge triple 94 (timer type 8253-5) puis à trois composants 95 type USART 8251A eux-mêmes reliés au bus 89 et à des composants 96, 97, 98 d'adaptation aux liaisons avec le bus 5 type AS 422 (unité de commande à distance), avec le bus 16 type RS 232 ou boucle 20 mA (gestion centralisée) et avec la liaison 99 reliée au clavier 19 et l'écran 20 de maintenance.

Le bus (89) du microprocesseur 88 est également relié au bus parallèle 86 qui est connecté en 86a aux circuits 9, 10, 11, 12, 13 au moyen de trois composants 100 type 8255. Le premier de ces composants 100 est relié à deux roues codeuses décimales 101, tandis que le troisième est relié à quatre sorties "tout ou rien" 102 et à quatre entrées "tout ou rien" 103.

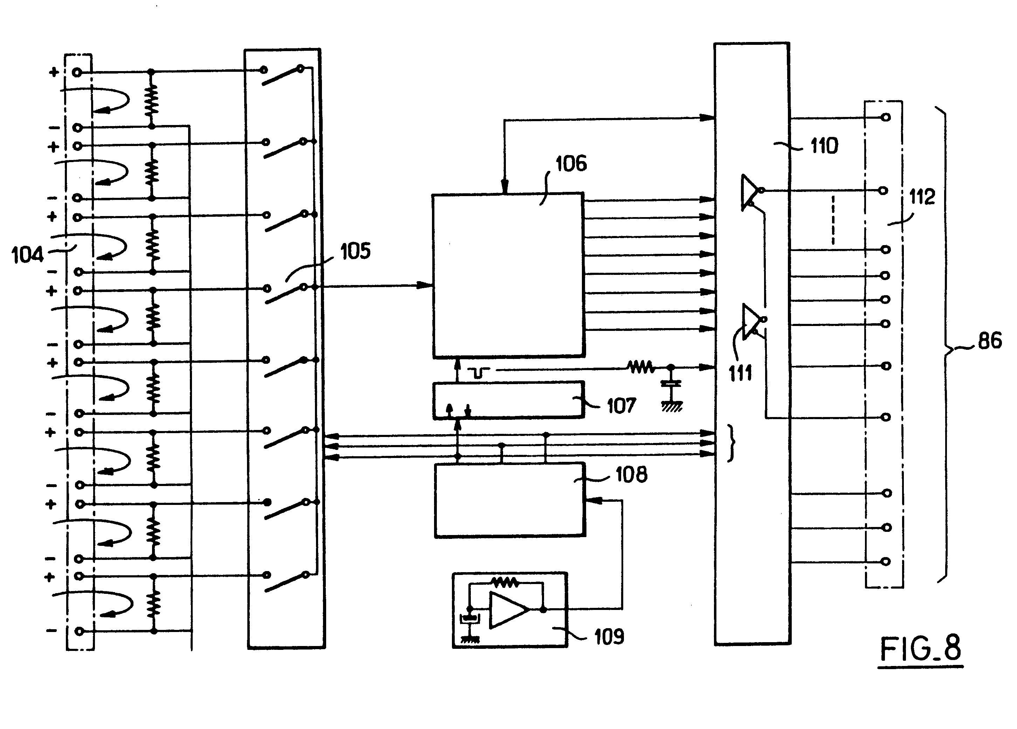

La figure 8 représente le schéma du circuit 9 à huit entrées analogiques regroupées sur un connecteur 104, qui permet de traiter des informations analogiques en 0,4/20 mA pour mesurer des puissances, des intensités, des fréquences, des cosinus, etc. Chacune de ces entrées est reliée à un interrupteur analogique tel que 105. Ces derniers sont reliés à un convertisseur analogique-digital 106, lui-même relié à un générateur de signaux carrés 107, un compteur binaire 108 et un oscillateur interne asynchrone 109.

Le convertisseur analogique 106 est relié à un interface 110 comprenant des portes à trois états et des amplificateurs 111. L'interface 110 est reliée par un connecteur 112 au bus parallèle 86 qui est relié au circuits de base 6, 7, 8.

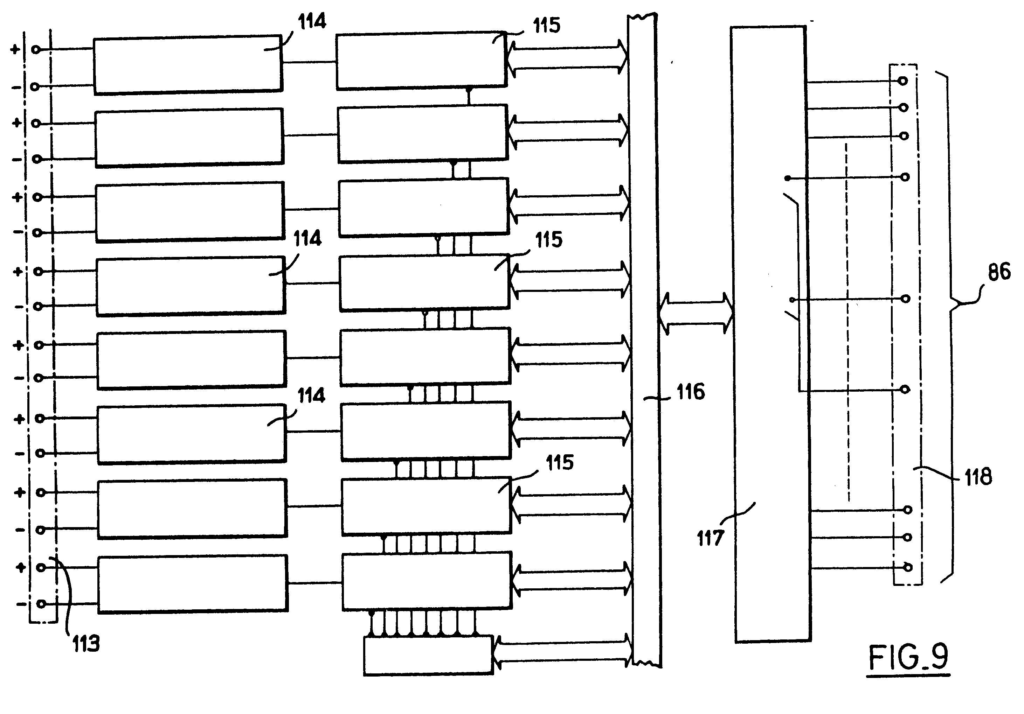

La figure 9 représente le schéma du circuit 10 à huit sorties analogiques regroupées sur un connecteur 113, qui permet d'envoyer vers des équipements à distance compatibles en 0,4/20 mA tels que voltmètres, ampèremètres, fréquence-mètres, etc. des informations analogiques. Chacune de ces sorties est reliée à un composant d'adaptation de tension tel que 114, rélié lui-même à un convertisseur numérique-analogique 115.

Chaque convertisseur 115 est relié par un bus 116 à un interface 117 semblable a l'interface 110 du circuit 9, qui est relié par un connecteur 118 au bus parallèle 86 qui est relié aux circuits de base 6, 7, 8.

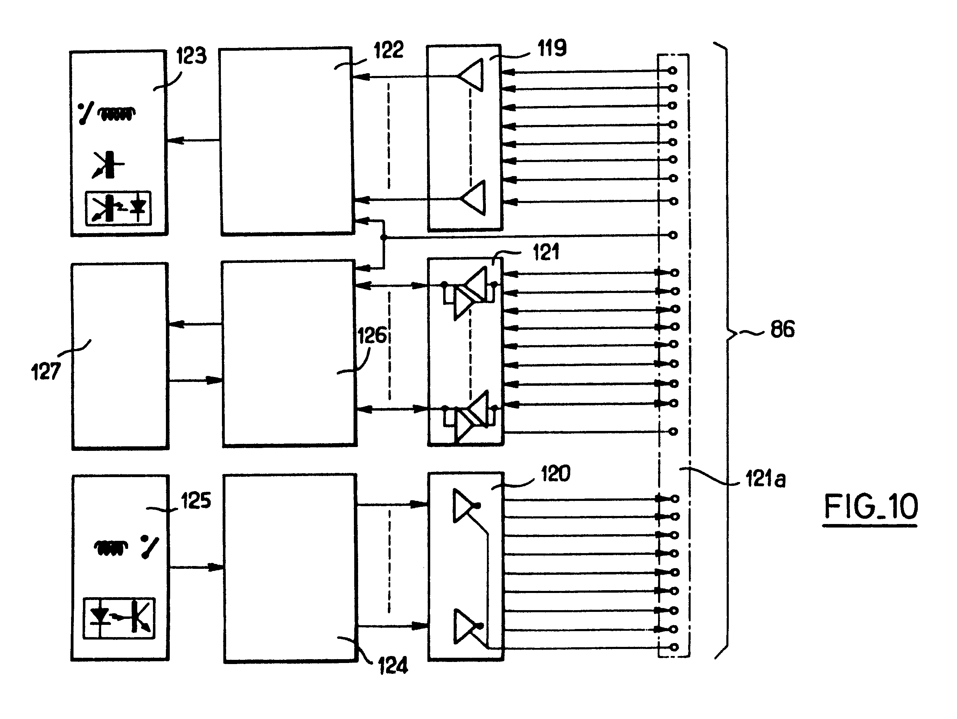

La figure 10 représente le schéma de l'un des circuits 11, 12, 13 qui permet de gérer des informations "tout ou rien".

Ce circuit comprend huit entrées "tout ou rien" 119, huit sorties "tout ou rien" 120 et huit entrées/sorties "tout ou rien" 121, toutes reliées au bus parallèle 86 par un connecteur 121a. Les entrées 119 sont reliées par un circuit 122 de mémorisation à bascules "D" à un circuit d'adaptation extérieure 123 comprenant un relais, un transistor de puissance ou un photocoupleur.

Les sorties 120 sont reliées par un circuit 124 de filtrage RC à un circuit d'adaptation extérieure 125.

Les entrées/sorties 121 sont reliées à un circuit 126 de mémorisation à bascule "D" ou de filtrage RC à un circuit d'adaptation extérieure 127.

De la description d'un exemple de réalisation du dispositif conforme à l'invention, il ressort que celui-ci permet par sa puissance de traitement, sa sécurité, la simplification de son cablage et sa simplification de mise en oeuvre de gérer un ensemble de distribution d'énergie comprenant 1200 télésignalisations, 400 télécommandes, 8 télémesures analogiques en "entrée", 8 télémesures analogiques en "sortie" et 72 entrées-sorties "tout ou rien". L'ensemble de ces informations est transmis sous forme de message à dix caractères sur une liaison bi-directionnelle normalisée à deux conducteurs d'émission et deux conducteurs de réception.

Bien que le dispositif que l'on vient de décrire est plus particulièrement destiné à gérer des tableaux de distribution d'énergie basse-tension du type débrochable, ce dispositif pourrait également équiper des ensembles:

- de distribution moyenne tension comprenant des équipements fixes ou débrochables,

- de distribution basse tension comprenant des équipements fixes ou déconnectables,

- d'unités déjà existantes et devant être rendues compatibles avec de nouveaux équipements.

Le dispositif conforme à l'invention présente également l'avantage d'être modulable suivant les besoins des utilisateurs.

Ainsi, l'unité centrale 3 pourrait être simplifiée en éliminant les circuits de contrôle de base 7 et 8 et en diminuant le nombre des circuits 11 à 13. De même, le nombre des entrées et sorties des circuits 9 et 10 pourrait être diminué.

Cette adaptation ou modification de l'unité centrale peut être aisément réalisée en débrochant certains circuits sous forme de cartes de la carte-mère 87.

De même, l'unité de commande à distance 2A, 2B, ... 2N pourrait être simplifiée en réduisant le nombre d'entrées et de sorties.

Par ailleurs, l'unité de commande locale 1A, 1B,. .. 1N pourrait être simplifiée en réduisant le nombre des circuits de commande tels que 41.

## Revendications

1. Dispositif d'interfaces électroniques pour le contrôle et la commande à distance d'un tableau de distribution d'énergie relié à un système de gestion centralisée (14) , ce tableau comportant plusieurs ensembles de distribution d'énergie comprenant chacun plusieurs départs de puissance, ce dispositif comprenant

- pour chaque départ de puissance, une unité de commande locale (1A, 1B, ... 1N) reliée à une unité de commande à distance (2A, 2B, ...2N),

- pour chaque ensemble de distribution, une unité centrale (3) située dans l'ensemble de distribution correspondant,

- chaque unité de commande locale (1A, 1B, ... 1N) comportant des moyens pour adresser à l'unité de commande à distance (2A, 2B, ... 2N) des informations "tout ou rien" de signalisation et de commande,

- chaque unité de commande à distance (2A, 2B, ... 2N) comprenant un microprocesseur (58) permettant de transformer les informations "tout ou rien" provenant de l'unité de commande locale (1A, 1B, ... 1N) en informations compatibles avec l'unité centrale (3),

- chaque unité de commande à distance (2A, 2B, ...2N) étant reliée à l'unité centrale (3) par une liaison normalisée (5) du type bus série à quatre conducteurs,

- chaque unité centrale (3) présentant au moins un circuit de contrôle de base (6) comprenant un microprocesseur permettant l'échange d'informations entre chaque unité de commande à distance (2A, 2B, ... 2N) et le système de gestion (14) et,

- chaque unité centrale (3) étant reliée au système de gestion centralisée (14) par une liaison (16) série ou boucle de courant à quatre conducteurs.

2. Dispositif conforme à la revendication 1, caractérisé en ce que le circuit de contrôle de base est relié en outre au moyen d'une liaison normalisée (18) à quatre conducteurs à un équipement de maintenance et de télédiagnostic (19, 20) permettant d'adresser directement des informations à ce circuit de contrôle.

3. Dispositif conforme à l'une des revendications 1 ou 2, caractérisé en ce que l'unité centrale (3) comporte un second circuit de contrôle (7) relié au moyen d'une liaison série (17) normalisée à quatre conducteurs avec une seconde unité de gestion (15).

4. Dispositif conforme à l'une des revendications 1 à 3, caractérisé en ce que l'unité centrale (3) comporte un troisième circuit de contrôle (8) connecté au moyen d'une liaison normalisée (21, 22) à quatre conducteurs avec une imprimante (25) et à un clavier (23) avec écran de visualisation (24) permettant de consigner les états du dispositif et l'introduction de données.

5. Dispositif conforme à l'une des revendications 1 à 4, caractérisé en ce que l'unité centrale (3) comporte en outre un circuit (9) à entrées analogiques reliées au microprocesseur du circuit de base (6, 7, 8) pour mesurer des grandeurs telles que puissance, intensité, et fréquence du courant, et un circuit (10) à sorties analogiques pour envoyer des informations analogiques vers des équiments à distance tels que des appareils pour mesurer les grandeurs précitées.

6. Dispositif conforme à l'une des revendications 1 à 5, caractérisé en ce que l'unité centrale (3) comporte en outre, des circuits (11, 12, 13) pour gérer entre elles les informations "tout ou rien" traitées par l'unité centrale (3), chacun de ces circuits comprenant plusieurs entrées et sorties "tout ou rien" reliées à des capteurs ou actionneurs extérieurs.

7. Dispositif conforme à l'une des revendications 1 à 6, caractérisé en ce que chaque unité de commande à distance (2A, 2B, ... 2N) comprend des moyens pour transformer les informations "tout ou rien" reçues de l'unité de commande locale (1A, 1B ...1N) en message de huit caractères.

8. Dispositif conforme à la revendication 7, caractérisé en ce que chaque unité de commande à distance (2A, 2B, ... 2N) comprend un microprocesseur (58) relié au moyen d'un bus (60) à une mémoire REPROM (61), et à un émetteur (63) et un récepteur différentiel (64) connectés à la liaison série normalisèe (5) à quatre conducteurs, à un interface (68) comprenant une mémoire RAM (68a) et une horloge (68b), à des entrées et sorties "tout ou rien" (69, 72) qui comportent des roues codeuses décimales (75, 76) et une roue codeuse hexadécimale (77), un amplificateur de signaux (74) et des relais de découplage (70, 73)) cette unité de commande à distance étant connectée directement à l'unité de commande locale (1A, 1B, ... 1N), à la liaison série normalisée (5) à quatre conducteurs qui la relie à l'unité centrale (3), et avec une alimentation basse tension (80 à 84).

9. Dispositif conforme à l'une des revendications 1 à 8, caractérisé en ce que chaque unité de commande locale (1A, 1B, ... 1N) comprend un circuit local de signalisation de base (30), un circuit local de signalisation d'extension (31), un circuit local de signalisation et de commande de base (32), un circuit local de signalisation et de commande d'extension (46) et différents circuits locaux de signalisation de commande (41) permettant, en liaison avec les circuits précédents, la commande locale des équipements de puissance du tableau de distribution.

10. Dispositif conforme à la revendication 9, caractérisé en ce que l'unité de commande locale (1A, 1B, ... 1N) est disposée dans un tiroir (26) monté de façon débrochable dans le tableau.

**Patentansprüche**

1. Vorrichtung für elektronische Schnittstellen, zur Fernüberwachung und -steuerung einer mit einem zentralisierten Leitsystem (14) verbundenen Energieverteilertafel, welche Tafel mehrere Energieverteilergruppen umfaßt, die jeweils mehrere Leistungsabgänge aufweisen, wobei diese Vorrichtung umfaßt: -für jeden Leistungsabgang eine lokale Steuereinheit (1A, 1B, ... 1N), welche an eine Fernsteuereinheit (2A, 2B, ... 2N) angeschlossen ist, - für jede Verteilergruppe eine in der betreffenden Verteilergruppe angeordnete Zentraleinheit (3), wobei - jede lokale Steuereinheit (1A, 1B, ... 1N) Mittel umfaßt, um der Fernsteuereinheit (2A, 2B,... 2N) Anzeige-und Steuerinformationen vom Typ "alles oder nichts" mitzuteilen, - jede Fernsteuereinheit (2A, 2B, ... 2N) einen Mikroprozessor (58) umfaßt, der erlaubt, die Informationen vom Typ "alles oder nichts" aus der lokalen Steuereinheit (1A, 1B, ...1N) in mit der Zentraleinheit (3) kompatible Informationen umzuwandeln, - jede Fernsteuereinheit (2A, 2B, ... 2N) mit der Zentraleinheit (3) über eine genormte Verbindung (5) vom Typ einer vieradrigen seriellen Busleitung verbunden ist, - jede Zentraleinheit (3) wenigstens eine Basisüberwachungsschaltung (6) aufweist, die einen Mikroprozessor umfaßt, der den Austausch von Informationen zwischen jeder Fernsteuereinheit (2A, 2B, ... 2N) und dem Leitsystem (14) gestattet, und - jede Zentraleinheit (3) mit dem zentralisierten Leitsystem (14) über eine vieradrige serielle oder Stromschleifenverbindung (16) verbunden ist.

2. Vorrichtung nach Anspruch 1, dadurch gekennzeichnet, daß die Basisüberwachungsschaltung ferner über eine vieradrige genormte Verbindung (18) mit einem Wartungs- und Ferndiagnosegerät (19, 20) verbunden ist, welches erlaubt, dieser Überwachungsschaltung Informationen direkt zuzuführen.

3. Vorrichtung nach Anspruch 1 oder 2, dadurch gekennzeichnet, daß die Zentraleinheit (3) eine zweite Überwachungsschaltung (7) umfaßt, welche über eine genormte vieradrige serielle Verbindung (17) mit einer zweiten Leiteinheit (15) verbunden ist.

4. Vorrichtung nach einem der Ansprüche 1 bis 3, dadurch gekennzeichnet, daß die Zentraleinheit (3) eine dritte Überwachungsschaltung (8) umfaßt, welche über eine genormte vieradrige Verbindung (21, 22) mit einem Drucker (25) und einer Tastatur (23) mit Anzeigeschirm (24) zur Eintragung der Zustände der Vorrichtung und Eingabe von Daten verbunden ist.

5. Vorrichtung nach einem der Ansprüche 1 bis 4, dadurch gekennzeichnet, daß die Zentraleinheit (3) ferner eine Schaltung (9) mit Analogeingängen umfaßt, die mit dem Mikroprozessor der Basisschaltung (6, 7, 8) verbunden sind, um Größen wie Stromleistung, -stärke und -frequenz zu messen, und eine Schaltung (10) mit Analogausgängen aufweist, um Analoginformationen zu entfernt angeordneten Ausrüstungen wie Geräten zur Messung dieser Größen zu senden.

6. Vorrichtung nach einem der Ansprüche 1 bis 5, dadurch gekennzeichnet, daß die Zentraleinheit (3) ferner Schaltungen (11,12,13) für die Untereinanderleitung der von der Zentraleinheit (3) verarbeiteten Informationen vom Typ "alles oder nichts" enthält, wobei jede dieser Schaltungen mehrere Eingänge und Ausgänge vom Typ "alles oder nichts" umfaßt, welche mit externen Fühlern oder Betätigungsorganen verbunden sind.

7. Vorrichtung nach einem der Ansprüche 1 bis 6, dadurch gekennzeichnet, daß jede Fernsteuereinheit (2A, 2B, ...2N) Mittel umfaßt, um die von der lokalen Steuereinheit (1A, 1B,. ..1N) empfangenen Informationen vom Typ "alles oder nichts" in eine Nachricht zu acht Zeichen umzusetzen.

8. Vorrichtung nach Anspruch 7, dadurch gekennzeichnet, daß jede Fernsteuereinheit (2A, 2B, ... 2N) einen Mikroprozessor (58) umfaßt, welcher über eine Busleitung (60) verbunden ist mit einem REPROM-Speicher (61), und mit einem Sender (63) und einem Differentialempfänger (64), welche an die genormte vieradrige serielle Verbindung (5) angeschlossen sind mit einer Schnittstelle (68), welche einen RAM-Speicher (68a) und eine Zeitbasis (68b) umfaßt, mit Eingängen und Ausgängen vom Typ "alles oder nichts" (69, 72), welche Dezimalcodierräder (75, 76) und ein Hexadezimal-Codierrad (77), einen Signalverstärker (74) und Entkopplungsrelais (70, 73) umfassen, wobei diese Fernsteuereinheit direkt mit der lokalen Steuereinheit (1A, 1B, ... 1N), mit der genormten vieradrigen seriellen Verbindung (5), welche sie mit der Zentraleinheit (3) verbindet, und mit einer Niederspannungsversorgung (80 bis 84) verbunden ist.

9. Vorrichtung nach einem der Ansprüche 1 bis 8, dadurch gekennzeichnet, daß jede lokale Steuereinheit (1A, 1B, ... 1N) eine lokale Basis-Anzeigeschaltung (30), eine lokale Erweiterungsanzeigeschaltung (31), eine lokale Basis-Anzeige- und Steuerschaltung(32), eine lokale Erweiterungs-Anzeige- und Steuerschaltung (46) und verschiedene lokale Steuer-Anzeigeschaltungen (41) umfaßt, die erlauben, in Verbindung mit den vorgenannten Schaltungen die lokale Steuerung der Leistungsanlagenteile der Verteilertafel durchzuführen.

10. Vorrichtung nach Anspruch 9, dadurch gekennzeichnet, daß die lokale Steuereinheit (1A, 1B, ... 1N) in einem Einschub (26) angeordnet ist, welcher mit lösbaren Steckverbindungen in der Tafel montiert ist.

**Claims**

1. Electronic interface device for remote control and monitoring of a power distribution panelboard connected to a centralized management system (14), this panelboard comprising a plurality of power distribution assemblies each having a plurality of outgoing power lines, this device comprising:
- in respect of each outgoing power line, a local control unit (1A, 1B, ... 1N) connected to a remote control unit (2A, 2B ...2N),
- in respect of each distribution assembly, a central unit (3), located within the corresponding distribution assembly,
-each local control unit (1A, 1B ...1N) comprising means for addressing on/off signaling and control data to the remote control unit (2A, 2B ... 2N),
-each remote control unit (2A, 2B ... 2N) comprising a microprocessor (58) for converting the on/off data supplied by the local control unit (1A, 1B ... 1N) into data which are compatible with the central unit (3),
- each remote control unit (2A, 2B ... 2N) being connected to the central unit (3) by means of a standardized link (5) of the four-conductor series bus type,
- each central unit (3) being provided with at least one basic control circuit (6) comprising a microprocessor for data exchange between each remote control unit (2A, 2B ...2N) and the management system (14), and - each central unit (3) being connected to the centralized management system (14) by means of a four-conductor series link or current loop (16).

2. Device in accordance with claim 1, characterized in that the basic control circuit is also connected by means of a standardized four-conductor link (18) to a remote diagnostic testing and maintenance equipment unit (19, 20) for directly addressing data to said control circuit.

3. Device in accordance with either of claims 1 or 2, characterized in that the central unit (3) comprises a second control circuit (7) connected by means of a standardized four-conductor series link (17) to a second management unit (15).

4. Device in accordance with one of claims 1 to 3, characterized in that the central unit (3) comprises a third control circuit (8) connected by means of a standardized four-conductor link (21, 22) to a printer (25) and to a keyboard (23) with display screen (24) for recording the states of the device and introducing data.

5. Device in accordance with one of claims 1 to 4, characterized in that the central unit (3) further comprises a circuit (9) having analog inputs connected to the microprocessor of the basic circuit (6, 7, 8) for measuring parameters such as power, current intensity and frequency, and a circuit (10) having analog outputs for transmitting analog data to remote equipment units such as instruments for measuring the parameters aforesaid.

6. Device in accordance with one of claims 1 to 5, characterized in that the central unit (3) further comprises circuits (11, 12, 13) for managing with respect to each other the on/off data processed by the central unit (3), each of these circuits comprising a plurality of on/off inputs and outputs connected to external sensors or actuators.

7. Device in accordance with one of claims 1 to 6, characterized in that each remote control unit (2A, 2B ... 2N) comprises means for converting the on/off data received from the local control unit (1A, 1B ... 1N) to an eight-character message.

8. Device in accordance with claim 7, characterized in that each remote control unit (2A, 2B ... 2N) comprises a microprocessor (58) connected by means of a bus (60) to a REPROM memory (61) and to a transmitter (63) and a differential receiver (64) which are connected to the standardized four-conductor series link (5), to an interface (68) comprising a RAM memory (68a) and a timer (68b), to on/off inputs and outputs (69, 72) which comprise decimal coding wheels (75, 76) and a hexadecimal coding wheel (77), a signal amplifier (74) and decoupling relays (70, 73), this remote control unit being connected directly to the local control unit (1A, 1B ... 1N), to the standardized four-conductor series link (5) which connects it to the central unit (3), and to a low-voltage supply (80 to 84).

9. Device in accordance with one of claims 1 to 8, characterized in that each local control unit (1A, 1B ... 1N) comprises a basic local signaling circuit (30), an extension local signaling circuit (31), a basic local signaling and control circuit (32), an extension local signaling and control circuit (46) and different local signaling-control circuits for local control of the power equipments of the distribution panelboard in conjunction with the circuits aforementioned.

10. Device in accordance with claim 9, characterized in that the local control unit (1A, 1B. ..1N) is placed within a drawer (26) pluggably mounted in the panelboard.

**FIG.1**

FIG.2

+24V

FIG. 3

0163572

FIG.4

## FIG.5

## FIG.6

FIG.7

0163572

FIG.8

FIG.9

FIG_10